# EUROPÄISCHE PATENTSCHRIFT

(11) **EP 2 243 569 B1**
(45) Veröffentlichungstag und Bekanntmachung des Hinweises auf die Patenterteilung: **27.04.2011**
(21) Anmeldenummer: 10000784.8
(22) Anmeldetag: 27.01.2010
(51) Int. Cl.: B21D 43/00, B23Q 7/14, B23K 26/08

(54) **Maschinelles Verfahren sowie maschinelle Anordnung zum Bearbeiten von plattenartigen Werkstücken, insbesondere von Blechen**
Manufacturing method and device for processing plate-shaped workpieces, in particular sheet metal
Procédé d'usinage ainsi qu'agencement mécanique de traitement de pièces usinées de types plaques, notamment de tôles

(30) Priorität: 24.04.2009 DE 102009018512
(43) Veröffentlichungstag der Anmeldung: 27.10.2010
(73) Patentinhaber: Trumpf Sachsen GmbH, 01904 Neukirch/Lausitz (DE)
(72) Erfinder: Hultsch, Andreas, 01904 Neukirch (DE); Grahle, Stefan, 01468 Moritzburg (DE)
(74) Vertreter: Kohler Schmid Möbus

(56) Entgegenhaltungen:
- EP-A1- 1 655 086
- EP-A1- 1 844 896
- DE-A1- 4 018 139

## Beschreibung

Die Erfindung betrifft ein maschinelles Verfahren sowie eine maschinelle Anordnung zum Bearbeiten von plattenartigen Werkstücken, insbesondere von Blechen.

Das maschinelle Verfahren weist folgende Verfahrensschritte auf:
- bei einer Bearbeitung wird ein Werkstückteil im Arbeitsbereich einer maschinellen Anordnung aus einem auf einer Werkstückauflage gelagerten Werkstück getrennt,
- nach dem Trennen des Werkstückteils wird im Arbeitsbereich der maschinellen Anordnung ein auf der Werkstückauflage gelagertes Werkstück einer Folgebearbeitung unterzogen und dabei ein Folgebearbeitungsprodukt erzeugt,
- nach der Folgebearbeitung werden das auf der Werkstückauflage gelagerte Werkstückteil sowie das auf der Werkstückauflage gelagerte Folgebearbeitungsprodukt gemeinsam mit der Werkstückauflage aus dem Arbeitsbereich der maschinellen Anordnung entfernt.

Die maschinelle Anordnung umfasst eine Werkstückauflage, eine Trennvorrichtung, eine Folgebearbeitungsvorrichtung sowie eine Abführvorrichtung,
- wobei die Trennvorrichtung ein Werkstückteil im Arbeitsbereich der maschinellen Anordnung aus einem auf der Werkstückauflage gelagerten Werkstück trennt,
- wobei nach dem Trennen des Werkstückteils die Folgebearbeitungsvorrichtung im Arbeitsbereich der maschinellen Anordnung ein auf der Werkstückauflage gelagertes Werkstück einer Folgebearbeitung unterzieht und dabei ein Folgebearbeitungsprodukt erzeugt und
- wobei die Abführvorrichtung nach der Folgebearbeitung das auf der Werkstückauflage gelagerte Werkstückteil sowie das auf der Werkstückauflage gelagerte Folgebearbeitungsprodukt gemeinsam mit der Werkstückauflage aus dem Arbeitsbereich der maschinellen Anordnung entfernt.

Gattungsgemäßer Stand der Technik ist bekannt aus EP 1 844 896 A1. Diese Druckschrift offenbart eine maschinelle Anordnung mit einer Bearbeitungseinheit zum Laserschneiden von Blechen. Dem Arbeitsbereich der Laserschneideinrichtung werden die zu bearbeitenden Werkstücke mit Hilfe einer Palette zugeführt, auf deren rostartiger Werkstückauflage die Bleche abgelegt sind. Im Rahmen der Werkstückbearbeitung können mittels der Laserschneideinrichtung nacheinander mehrere Fertigteile erzeugt werden, die jeweils auf der Werkstückauflage der Palette verbleiben. Nach Beendigung der Bearbeitung wird die Palette gemeinsam mit den darauf gelagerten Fertigteilen aus dem Arbeitsbereich der Laserschneideinrichtung entfernt. Zum Bewegen der Palette dient eine maschinelle Fördervorrichtung üblicher Bauart.

Aufgabe der vorliegenden Erfindung ist es, ein maschinelles Bearbeitungsverfahren sowie eine maschinelle Anordnung auch für Bearbeitungsfälle bereitzustellen, in denen das Bearbeitungsergebnis besonderen Qualitätsansprüchen genügen muss.

Erfindungsgemäß gelöst wird diese Aufgabe durch das maschinelle Verfahren nach Patentanspruch 1 sowie durch die maschinelle Anordnung nach Patentanspruch 8. Im Falle der Erfindung wird demnach ein durch trennende Werkstückbearbeitung erstelltes Werkstückteil im Arbeitsbereich der maschinellen Anordnung von der Werkstückauflage abgenommen, während der Dauer einer sich anschließenden Folgebearbeitung abseits des Ortes der Folgebearbeitung zwischengelagert und nach Abschluss der Folgebearbeitung auf die im Arbeitsbereich der maschinellen Anordnung befindliche Werkstückauflage zurückgelegt. Abschließend wird das auf die Werkstückauflage zurückgelegte Werkstückteil gemeinsam mit dem auf der Werkstückauflage gelagerten Folgebearbeitungsprodukt und der Werkstückauflage selbst aus dem Arbeitsbereich der maschinellen Anordnung entfernt. Aufgrund der erfindungsgemäß vorgesehenen räumlichen Trennung des zunächst erzeugten Werkstückteils einerseits und des Ortes der Folgebearbeitung andererseits ist das Werkstückteil vor schädlichen Einflüssen der Folgebearbeitung, beispielsweise vor einer mit der Folgebearbeitung verbundenen Verschmutzung, geschützt. Insofern ist die Erfindung für solche Fälle von besonderer Bedeutung, in denen das später zwischengelagerte Werkstückteil in enger räumlicher Nähe der sich an die trennende Werkstückbearbeitung anschließenden Folgebearbeitung erzeugt wird. Außerdem wird durch die für die Dauer der Folgebearbeitung vorgesehene Abnahme des zunächst erstellten Werkstückteils von der Werkstückauflage sichergestellt, dass das Werkstückteil die Folgebearbeitung nicht behindert. Andernfalls denkbar wären beispielsweise Kollisionen des aus einem Werkstückverbund getrennten Werkstückteils mit einer Bearbeitungseinrichtung, die zur Durchführung der Folgebearbeitung eingesetzt wird. Auch derartige Kollisionen hätten nachteilige Konsequenzen für das Bearbeitungsergebnis. Dass die Abnahme des zwischenzulagernden Werkstückteils von der Werkstückauflage im Arbeitsbereich der maschinellen Anordnung erfolgt, dient der Beschleunigung des Verfahrensablaufes. So kann erfindungsgemäß davon abgesehen werden, die Werkstückauflage zum Abnehmen des Werkstückteils aus dem Arbeitsbereich der maschinellen Anordnung zu entfernen und anschließend zur Durchführung der Folgebearbeitung erneut in den Arbeitsbereich der maschinellen Anordnung zu überführen. Entsprechend wirkt es sich im Falle der Erfindung aus, dass das Werkstückteil im Anschluss an die Folgebearbeitung im Arbeitsbereich der maschinellen Anordnung auf die Werkstückauflage zurückgelegt wird.

Besondere Ausführungsarten des maschinellen Verfahrens nach Patentanspruch 1 sowie der maschinellen Anordnung nach Patentanspruch 8 ergeben sich aus den abhängigen Patentansprüchen 2 bis 7 und 9 bis 13.

Gemäß Patentanspruch 2 wird im Falle einer bevorzugten Variante des erfindungsgemäßen Verfahrens das von der Werkstückauflage abgenommene Werkstückteil während der Folgebearbeitung im Arbeitsbereich der maschinellen Anordnung belassen. Auch diese Maßnahme dient der zeitlichen Optimierung des Prozessablaufs. Sowohl beim Überführen des Werkstückteils in seine "Parkposition" als auch beim Rücküberführen des Werkstückteils auf die Werkstückauflage sind lediglich kurze Wege zurückzulegen. Beide Verfahrensschritte lassen sich folglich schnell ausführen.

Patentanspruch 3 betrifft den für die Praxis besonders relevanten Fall, dass es sich sowohl bei der zunächst durchgeführten Werkstückbearbeitung als auch bei der Folgebearbeitung um eine trennende Werkstückbearbeitung handelt. Als Bearbeitungsart bevorzugt wird thermisches Abtragen, insbesondere Laserschneiden.

Als besonders vorteilhaft erweist sich das erfindungsgemäße Konzept, wenn die Folgebearbeitung an dem Restwerkstück der Erstbearbeitung durchgeführt wird (Patentanspruch 4) und/oder wenn Blech in Form von Elektroblech bearbeitet wird und als Werkstückteile ein Rotorblech und ein Statorblech erzeugt werden (Patentanspruch 5). Insbesondere das Laserschneiden von Elektroblechen ist ein noch verhältnismäßig junges Bearbeitungsverfahren. Dieses Bearbeitungsverfahren empfiehlt sich aufgrund seiner Flexibilität vor allem bei kleinen Losgrößen, d.h. in Bearbeitungsfällen, in denen eine stanzende Werkstückbearbeitung aufgrund des Aufwands für die Herstellung der benötigten Stanzwerkzeuge unrentabel wäre. Die als Ergebnis der trennenden Bearbeitung von Elektroblechen erzeugten Rotorbleche und Statorbleche müssen aufgrund ihrer Zweckbestimmung besonders hohen Qualitätsansprüchen genügen. An den Einzelblechen anhaftende Schneidreste, z.B. Metallspritzer, würden an den etwa für Elektromotoren zu erstellenden Blechpaketen im praktischen Einsatz Kurzschlüsse verursachen.

Bevorzugterweise wird im Rahmen des erfindungsgemäßen Verfahrens aus dem betreffenden Rohblech zunächst das Rotorblech ausgeschnitten. Dieses Rotorblech wird anschließend als erstes Werkstückteil von der Werkstückauflage abgenommen und für die Dauer der Folgebearbeitung abseits des Ortes der Folgebearbeitung "geparkt". Im Rahmen der Folgebearbeitung wird an dem Restblech der Erstbearbeitung ein dem zuvor erstellten Rotorblech zuordenbares Statorblech freigeschnitten. Der Verlauf der Schnittlinie bei der Erstellung des Statorbleches wird zweckmäßigerweise derart gewählt, dass das freigeschnittene Statorblech den Bereich des zuvor abgetrennten und vorübergehend von der Werkstückauflage abgenommenen Rotorblechs mit einer räumlichen Zuordnung umschließt, weiche der räumlichen Zuordnung von Rotorblech und Statorblech bei deren späteren praktischen Einsatz entspricht. Beispielsweise in diesem Fall werden das zunächst erstellte Werkstückteil und das Folgebearbeitungsprodukt mit aufeinander abgestimmter Geometrie erzeugt (Patentanspruch 6). Das zu bearbeitende Werkstück wird optimal ausgenutzt. Verschnitt wird auf ein Minimum begrenzt.

Nach Abschluss der Folgebearbeitung kann das vorübergehend von der Werkstückauflage abgenommene Werkstückteil grundsätzlich mit beliebiger Anordnung auf die Werkstückauflage zurückgelegt werden. Im Hinblick auf nachfolgende Verfahrensschritte kann es aber auch von Vorteil sein, das zwischengelagerte Werkstückteil nach der Folgebearbeitung definiert auf der Werkstückauflage zu positionieren (Patentanspruch 7). Eine derartige Vorgehensweise empfiehlt sich beispielsweise dann, wenn das Werkstückteil nach dem Verlassen des Arbeitsbereiches der maschinellen Anordnung automatisiert, d.h. unter Einsatz einer maschinellen Einrichtung, von der Werkstückauflage entladen wird. Nur bei definierter Anordnung kann das Werkstückteil von einer maschinellen Entladevorrichtung funktionssicher aufgenommen werden.

Eine bevorzugte Bauart der erfindungsgemäßen maschinellen Anordnung zeichnet sich dadurch aus, dass die für die trennende Werkstückbearbeitung eingesetzte Trennvorrichtung einerseits sowie eine zum Abnehmen des zunächst freigeschnittenen Werkstückteils von der Werkstückauflage vorgesehene Entnahmevorrichtung und/oder eine zum Zwischenlagern des temporär von der Werkstückauflage abgenommenen Werkstückteils vorgesehene Haltevorrichtung und/oder eine zur Rücküberführung des zwischengelagerten Werkstückteils auf die Werkstückauflage vorgesehene Ablagevorrichtung andererseits miteinander bewegungsverbunden sind (Patentansprüche 9, 10, 11). Aufgrund der bewegungsmäßigen Kopplung lassen sich die genannten Vorrichtungen mithilfe von gemeinsamen Antriebskomponenten bewegen. Daraus resultiert ein konstruktiv einfacher und kompakter Aufbau der Gesamtanordnung.

Entsprechendes bewirkt die im Falle einer weiteren bevorzugten Erfindungsbauart vorgesehene Integration von wenigstens zwei der genannten Vorrichtungen in eine Bedieneinheit der Transfervorrichtung (Patentanspruch 12).

Im Falle von maschinellen Anordnungen, deren Trennvorrichtung an einer Bewegungseinheit vorgesehen ist, empfiehlt es sich, diese Bewegungseinheit zur bewegungsmäßigen Anbindung der Trennvorrichtung an die Entnahmevorrichtung und/oder an die Haltevorrichtung und/oder an die Ablagevorrichtung und/oder an die Bedieneinheit der Transfervorrichtung zu nutzen (Patentanspruch 13).

Nachstehend wird die Erfindung anhand beispielhafter schematischer Darstellungen näher erläutert. Es zeigen:
- Fig. 1: eine Laserschneidanlage unmittelbar vor Beginn der schnei- denden Bearbeitung eines Elektroblechs,
- Fig. 2: die Laserschneidanlage gemäß Fig. 1 in einer ersten Bearbei- tungsphase beim Schneiden des Elektroblechs,
- Fig. 3: die Laserschneidanlage gemäß den Fign. 1 und 2 in einer zwei- ten Bearbeitungsphase,
- Fig. 4: die Laserschneidanlage gemäß den Fign. 1 bis 3 in einer drit- ten Bearbeitungsphase und
- Fig. 5: die Laserschneidanlage gemäß den Fign. 1 bis 4 in einer vier- ten Bearbeitungsphase.

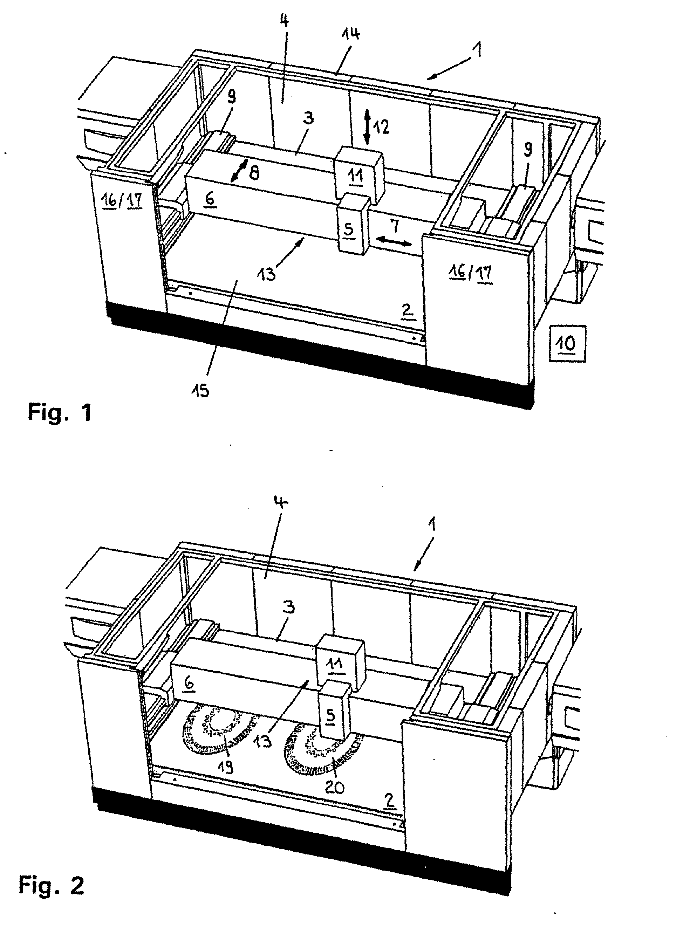

Gemäß den Fign. 1 bis 5 wird an einer als Laserschneidanlage 1 ausgeführten maschinellen Anordnung ein Blech in Form eines Elektroblechs 2 geschnitten. Das Elektroblech 2 besteht wie üblich aus einer Eisen-Silizium-Legierung. Es wird von einer Werkstückauflage 3 üblicher Bauart gelagert.

Die Werkstückauflage 3 sowie das darauf abgelegte Elektroblech 2 sind im Inneren eines Arbeitsraumes 4 der Laserschneidanlage 1 und dort im Arbeitsbereich eines Laserschneidkopfes 5 angeordnet. Denkbar sind auch Laserschneidanlagen mit mehreren Laserschneidköpfen.

Bei dem Arbeitsbereich des Laserschneidkopfes 5 handelt es sich um denjenigen Teil des Arbeitsraumes 4, der für den Laserschneidkopf 5 erreichbar ist.

Letzterer ist an einer Brücke 6 in Richtung eines Doppelpfeils 7 verfahrbar. Gemeinsam mit dem Laserschneidkopf 5 kann sich die Brücke 6 senkrecht zu dem Doppelpfeil 7 in Richtung eines Doppelpfeils 8 entlang zweier Längsführungen 9 bewegen. Insofern bildet die Brücke 6 eine Bewegungseinheit des Laserkopfs 5.

Durch entsprechendes Verfahren der Brücke 6 entlang der Längsführungen 9 sowie des Laserschneidkopfs 5 entlang der Brücke 6 kann von dem Laserschneidkopf 5 jeder Punkt an dem von der Brücke 6 überspannten Elektroblech 2 angefahren werden. Die Bewegungen des Laserschneidkopfes 5 und der Brücke 6 werden ebenso wie die übrigen wesentlichen Funktionen der Laserschneidanlage 1 numerisch gesteuert ausgeführt. Zu diesem Zweck vorgesehen ist eine andeutungsweise dargestellte CNC-Steuerung 10.

Von der CNC-Steuerung 10 wird unter anderem eine Bedieneinheit 11 gesteuert, die an der Brücke 6 zusätzlich zu dem Laserschneidkopf 5 vorgesehen ist. Die Bedieneinheit 11 umfasst eine steuerbare Halteeinheit, die an der Unterseite der Brücke 6 angeordnet und in den Abbildungen durch die Brücke 6 verdeckt ist. Die Halteeinheit der Bedieneinheit 11 ist in vertikaler Richtung (Doppelpfeil 12) heb- und senkbar. Sie erstreckt sich nahezu über die gesamte Länge der Brücke 6. Als Halteeinheit sind eine elektromagnetischen Halteplatte und auch andersartige, beispielsweise pneumatische oder mechanische Halteorgane denkbar. Ebenso wie die Brücke 6 ist die an dieser vorgesehene Bedieneinheit 11 Teil einer Transfervorrichtung 13.

Der Arbeitsraum 4 der Laserschneidanlage 1 wird durch eine Arbeitsraumabtrennung 14 begrenzt. Eine Be- und Entladeöffnung 15 der Arbeitsraumabtrennung 14 kann mittels einer segmentierten Schiebetür 16 verschlossen werden. In den Abbildungen ist die Schiebetür 16 des Arbeitsraumes 4 der Anschaulichkeit halber weitgehend geöffnet. Schiebetürsegmente 17 sind beidseits der Be- und Entladeöffnung 15 übereinander geschoben. Beide Segmentpakete lassen sich zum Be- und Entladen des Arbeitsraumes 4 gegenüber den in den Abbildungen gezeigten Positionen noch weiter nach außen verlagern und geben dann den Arbeitsraum 4 über seine gesamte Breite frei.

Beim Beladevorgang wird die Werkstückauflage 3 mit einem darauf aufliegenden, noch unbearbeiteten Elektroblech 2 durch die von der Schiebetür 16 vollständig freigegebene Be- und Entladeöffnung 15 in das Innere des Arbeitsraums 4 transportiert. Als Be- und Entladevorrichtung können herkömmliche Flurförderzeuge, beispielsweise Gabelstapler, aber auch sonstige für Laserschneidanlagen übliche Beschickungseinrichtungen vorgesehen sein. Befinden sich die Werkstückauflage 3 und das zu bearbeitende Elektroblech 2 in ihrer Bearbeitungsposition (Fig. 1), so wird die Schiebetür 16 der Arbeitsraumabtrennung 14 geschlossen.

Anschließend wird der Laserschneidkopf 5 in Betrieb genommen. Unter Verfahren des Laserschneidkopfes 5 entlang der Brücke 6 sowie unter gleichzeitigem Verfahren der Brücke 6 in Richtung des Doppelpfeils 8 werden aus dem Elektroblech 2 nacheinander als jeweils erstes Werkstückteil ein Rotorblech 19 sowie ein Rotorblech 20 ausgeschnitten (Fig. 2). Bei Einsatz von zwei Laserschneidköpfen können zwei Rotorbleche gleichzeitig erstellt werden.

Die aus dem Elektroblech 2 getrennten Rotorbleche 19, 20 liegen nach dem Freischneiden auf der Werkstückauflage 3 auf.

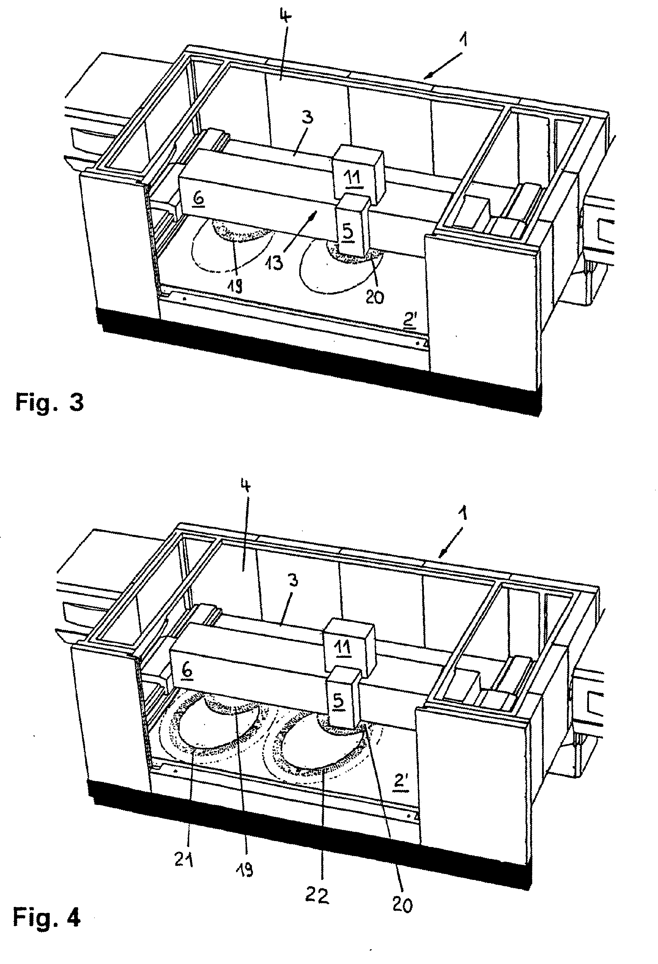

Durch Verfahren der Brücke 6 wird die an dieser vorgesehene Bedieneinheit 11 mit ihrer Halteeinheit, beispielsweise mit ihrer elektromagnetischen Halteplatte über die freigeschnittenen Rotorbleche 19, 20 bewegt. Bei Verwendung einer elektromagnetischen Halteplatte wird diese auf die Rotorbleche 19, 20 abgesenkt und durch Aktivieren der elektromagnetischen Halteplatte werden die Rotorbleche 19, 20 an dieser festgelegt. Anschließend wird die elektromagnetische Halteplatte gemeinsam mit den daran magnetisch gehaltenen Rotorblechen 19, 20 angehoben. Die Rotorbleche 19, 20 werden auf diese Art und Weise im Arbeitsbereich des Laserschneidkopfs 5 von der Werkstückauflage 3 abgenommen. Es ergeben sich damit die Verhältnisse gemäß Fig. 3. Andersartige Halteeinheiten werden gegebenenfalls in entsprechender Weise eingesetzt.

Die Rotorbleche 19, 20 sind an der Brücke 6 zwischengelagert bzw. "geparkt". Sie liegen dabei außerhalb des Bewegungsbereiches des Laserschneidkopfes 5 und besitzen einen hinreichenden Abstand von dem an dem Laserschneidkopf 5 austretenden Laserschneidstrahl. Ein separates Ausschleusen der Rotorbleche 19, 20 aus dem Arbeitsraum 4 der Laserschneidanlage 1 ist nicht erforderlich.

Infolgedessen ist es möglich, bei an der Brücke 6 geparkten Rotorblechen 19, 20 mittels des Laserschneidkopfes 5 an dem auf der Werkstückauflage 3 verbliebenen Restwerkstück bzw. Restblech 2' eine Folgebearbeitung durchzuführen. Der Laserschneidkopf 5 dient demnach sowohl als Trennvorrichtung als auch als Folgebearbeitungsvorrichtung.

Bei der Folgebearbeitung wird an dem Restblech 2'zu jedem Rotorblech 19, 20 ein Folgebearbeitungsprodukt in Form eines Statorblechs ausgeschnitten. Ein Statorblech 21 ist dem Rotorblech 19, ein Statorblech 22 dem Rotorblech 20 zugeordnet. Der Verlauf der Schnittlinien beim Trennen der Statorbleche 21, 22 aus dem Werkstückverbund ist derart gewählt, dass die freigeschnittenen Statorbleche 21, 22 die durch Abnehmen der Rotorbleche 19, 20 von der Werkstückauflage 3 freigegebenen Bereiche des Elektroblechs 2 bzw. des Restblechs 2' mit einer räumlichen Zuordnung umschließen, welche der gegenseitigen Zuordnung der Rotorbleche 19, 20 sowie der Statorbleche 21, 22 bei deren späteren Einsatz in einem Elektromotor entspricht. Fig. 4 zeigt den Betriebszustand der Laserschneidanlage 1 nach Beendigung der Folgebearbeitung, d.h.nach dem Freischneiden der Statorbleche 21, 22. Nach wie vor sind die Rotorbleche 19, 20 an der Brücke 6 zwischengelagert. Der Laserschneidkopf 5 ist ausgeschaltet.

Durch entsprechendes Verfahren der Brücke 6 werden nun die an deren Unterseite gehaltenen Rotorbleche 19, 20 über die zuvor von ihnen freigegebenen Ausschnitte an dem Elektroblech 2 bzw. dem Restblech 2' bewegt. Anschließend wird die Halteeinheit bzw. die elektromagnetische Halteplatte der Bedieneinheit 11 gemeinsam mit den daran gehaltenen Rotorblechen 19, 20 abgesenkt. Dadurch gelangen die Rotorbleche 19, 20 zurück auf die Werkstückauflage 3. Alles in allem fungiert die Halteeinheit bzw. die Bedieneinheit 11 der Transfervorrichtung 13 für die Rotorbleche 19, 20 als Entnahmevorrichtung, als Haltevorrichtung und auch als Ablagevorrichtung.

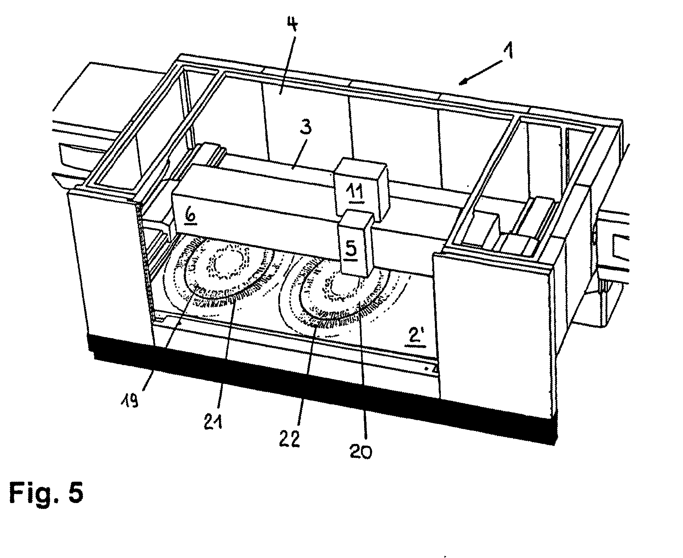

Nach Deaktivieren der Halteeinheit bzw. der elektromagnetischen Halteplatte der Bedieneinheit 11 und damit verbundener Freigabe der Rotorbleche 19, 20 ergibt sich schließlich die Situation gemäß Fig. 5. Die Rotorbleche 19, 20 liegen innerhalb der zugeordneten Statorbleche 21, 22. Die einander zugeordneten Rotorbleche 19, 20 und Statorbleche 21, 22 sind mit gegenseitiger Sollausrichtung positioniert und werden durch den beim Laserschneiden erzeugten Schneidspalt voneinander getrennt. Der Schneidspalt entspricht dem späteren Luftspalt bei Einsatz der Rotorbleche 19, 20 sowie der Statorbleche 21, 22 in einem Elektromotor.

Nach dem Ablegen der Rotorbleche 19, 20 auf der Werkstückauflage 3 wird die Schiebetür 16 der Arbeitsraumabtrennung 14 durch Verschieben der Schiebetürsegmente 17 vollständig geöffnet. Dadurch wird die Werkstückauflage 3 mit den darauf abgelegten Fertigteilen für die nun als Abführeinrichtung genutzte Be- und Entladevorrichtung zugänglich. Mithilfe der Be- und Entladevorrichtung wird die Werkstückauflage 3 gemeinsam mit den Rotorblechen 19, 20, den Statorblechen 21, 22 und dem verbliebenen Restblech 2'aus dem Arbeitsraum 4 der Laserschneidanlage 1 entfernt und zu einer Entladestation verbracht, an welcher die Rotorbleche 19, 20, die Statorbleche 21, 22 sowie das verbliebene Restblech 2' manuell oder automatisiert von der Werkstückauflage 3 abgenommen werden.

## Patentansprüche

1. Maschinelles Verfahren zum Bearbeiten von plattenartigen Werkstücken, insbesondere von Blechen (2), mit folgenden Verfahrensschritten:
• bei einer Bearbeitung wird ein Werkstückteil (19, 20) im Arbeitsbereich einer maschinellen Anordnung (1) aus einem auf einer Werkstückauflage (3) gelagerten Werkstück getrennt,
• nach dem Trennen des Werkstückteils (19,20) wird im Arbeitsbereich der maschinellen Anordnung (1) ein auf der Werkstückauflage (3) gelagertes Werkstück einer Folgebearbeitung unterzogen und dabei ein Folgebearbeitungsprodukt (21, 22) erzeugt,
• nach der Folgebearbeitung werden das auf der Werkstückauflage (3) gelagerte Werkstückteil (19, 20) sowie das auf der Werkstückauflage (3) gelagerte Folgebearbeitungsprodukt (21, 22) gemeinsam mit der Werkstückauflage (3) aus dem Arbeitsbereich der maschinellen Anordnung (1) entfernt,
**dadurch gekennzeichnet,**
• **dass** das Werkstückteil (19, 20) nach dem Trennen aus dem Werkstück im Arbeitsbereich der maschinellen Anordnung (1) von der Werkstückauflage (3) abgenommen wird,
• **dass** die Folgebearbeitung bei von der Werkstückauflage (3) abgenommenem Werkstückteil (19, 20) durchgeführt wird und
• **dass** das Werkstückteil (19, 20) nach der Folgebearbeitung auf die im Arbeitsbereich der maschinellen Anordnung (1) befindliche Werkstückauflage (3) zurückgelegt wird, ehe das auf der Werkstückauflage (3) gelagerte Werkstückteil (19, 20) sowie das auf der Werkstückauflage (3) gelagerte Folgebearbeitungsprodukt (21, 22) gemeinsam mit der Werkstückauflage (3) aus dem Arbeitsbereich der maschinellen Anordnung (1) entfernt werden.

2. Maschinelles Verfahren nach Anspruch 1, **dadurch gekennzeichnet, dass** das von der Werkstückauflage (3) abgenommene Werkstückteil (19, 20) während der Folgebearbeitung im Arbeitsbereich der maschinellen Anordnung (1) belassen wird.

3. Maschinelles Verfahren nach einem der vorhergehenden Ansprüche, **dadurch gekennzeichnet, dass** als Folgebearbeitung eine trennende Werkstückbearbeitung durchgeführt und dabei als Folgebearbeitungsprodukt (21, 22) ein zweites Werkstückteil durch Trennen erzeugt wird.

4. Maschinelles Verfahren nach einem der vorhergehenden Ansprüche, **dadurch gekennzeichnet, dass** die Folgebearbeitung an dem Restwerkstück (2') der vorausgegangenen Bearbeitung durchgeführt wird.

5. Maschinelles Verfahren nach einem der vorhergehenden Ansprüche, **dadurch gekennzeichnet, dass** als Blech (2) ein Elektroblech bearbeitet wird und dass als Werkstückteil (19, 20) ein Rotorblech und als Folgebearbeitungsprodukt (21, 22) bzw. als zweites Werkstückteil ein Statorblech erzeugt werden.

6. Maschinelles Verfahren nach einem der vorhergehenden Ansprüche, **dadurch gekennzeichnet, dass** das Werkstückteil (19, 20) und das Folgebearbeitungsprodukt (21, 22) mit aufeinander abgestimmter Geometrie erzeugt werden.

7. Maschinelles Verfahren nach einem der vorhergehenden Ansprüche, **dadurch gekennzeichnet, dass** das Werkstückteil (19, 20) nach der Folgebearbeitung mit definierter Anordnung auf die Werkstückauflage (3) zurückgelegt wird.

8. Maschinelle Anordnung zum Bearbeiten von plattenartigen Werkstücken, insbesondere von Blechen (2), mit einer Werkstückauflage (3), mit einer Trennvorrichtung (5), mit einer Folgebearbeitungsvorrichtung (5) sowie mit einer Abführvorrichtung,
• wobei die Trennvorrichtung (5) ein Werkstückteil (19, 20) im Arbeitsbereich der maschinellen Anordnung (1) aus einem auf der Werkstückauflage (3) gelagerten Werkstück trennt,
• wobei nach dem Trennen des Werkstückteils (19, 20) die Folgebearbeitungsvorrichtung (5) im Arbeitsbereich der maschinellen Anordnung (1) ein auf der Werkstückauflage (3) gelagertes Werkstück einer Folgebearbeitung unterzieht und dabei ein Folgebearbeitungsprodukt (21, 22) erzeugt und
• wobei nach der Folgebearbeitung die Abführvorrichtung das auf der Werkstückauflage (3) gelagerte Werkstückteil (19, 20) sowie das auf der Werkstückauflage (3) gelagerte Folgebearbeitungsprodukt (21, 22) gemeinsam mit der Werkstückauflage (3) aus dem Arbeitsbereich der maschinellen Anordnung (1) entfernt,
**dadurch gekennzeichnet,**
• **dass** in dem Arbeitsbereich der maschinellen Anordnung (1) eine Transfervorrichtung (13) vorgesehen ist, welche das Werkstückteil (19, 20) nach dem Trennen aus dem Werkstück von der Werkstückauflage (3) abnimmt,
• **dass** die Folgebearbeitungsvorrichtung (5) die Folgebearbeitung bei von der Werkstückauflage (3) abgenommem Werkstückteil (19, 20) durchführt und
• **dass** die Transfervorrichtung (13) das Werkstückteil (19, 20) nach der Folgebearbeitung auf die im Arbeitsbereich der maschinellen Anordnung (1) befindliche Werkstückauflage (3) zurücklegt, ehe die Abführvorrichtung das auf der Werkstückauflage (3) gelagerte Werkstückteil (19, 20) sowie das auf der Werkstückauflage (3) gelagerte Folgebearbeitungsprodukt (21, 22) gemeinsam mit der Werkstückauflage (3) aus dem Arbeitsbereich der maschinellen Anordnung (1) entfernt.

9. Maschinelle Anordnung nach Anspruch 8, **dadurch gekennzeichnet, dass** sich die Trennvorrichtung (5) bei der trennenden Werkstückbearbeitung relativ zu dem Werkstück bewegt und dass die Transfervorrichtung (13) eine mit der Trennvorrichtung (5) bewegungsverbundene Entnahmevorrichtung (11) aufweist, welche das Werkstückteil (19, 20) nach dem Trennen aus dem Werkstück von der Werkstückauflage (3) abnimmt.

10. Maschinelle Anordnung nach Anspruch 8 oder 9, **dadurch gekennzeichnet, dass** sich die Trennvorrichtung (5) bei der trennenden Werkstückbearbeitung relativ zu dem Werkstück bewegt und dass die Transfervorrichtung (13) eine mit der Trennvorrichtung (5) bewegungsverbundene Haltevorrichtung (11) aufweist, welche das von der Werkstückauflage (3) abgenommene Werkstückteil (19, 20) während der Folgebearbeitung hält.

11. Maschinelle Anordnung nach einem der Ansprüche 8 bis 10, **dadurch gekennzeichnet, dass** sich die Trennvorrichtung (5) bei der trennenden Werkstückbearbeitung relativ zu dem Werkstück bewegt und dass die Transfervorrichtung (13) eine mit der Trennvorrichtung (5) bewegungsverbundene Ablagevorrichtung (11) aufweist, welche das Werkstückteil (19, 20) nach der Folgebearbeitung auf die Werkstückauflage (3) zurücklegt.

12. Maschinelle Anordnung nach einem der Ansprüche 8 bis 11, **dadurch gekennzeichnet, dass** von der Entnahmevorrichtung (11), der Haltevorrichtung (11) und der Ablagevorrichtung (11) wenigstens zwei Vorrichtungen von einer Bedieneinheit (11) der Transfervorrichtung (13) gebildet sind.

13. Maschinelle Anordnung nach einem der Ansprüche 8 bis 12, **dadurch gekennzeichnet, dass** die Trennvorrichtung (5) an einer Bewegungseinheit (6) vorgesehen ist, welche die Trennvorrichtung (5) bei der trennenden Werkstückbearbeitung relativ zu dem Werkstück bewegt und dass die Entnahmevorrichtung (11) und/oder die Haltevorrichtung (11) und/oder die Ablagevorrichtung (11) und/oder die Bedieneinheit (11) der Transfervorrichtung (13) mit der Bewegungseinheit (6) der Trennvorrichtung (5) bewegungsverbunden, vorzugsweise an der Bewegungseinheit (6) der Trennvorrichtung (5) vorgesehen, ist bzw. sind.

## Claims

1. A machine method for processing plate-like workpieces, especially metal sheets (2), comprising the following method steps:
• in a processing operation, a workpiece part (19, 20) is separated in a working area of a machine arrangement (1) from a workpiece supported on a workpiece support (3),
• after separation of the workpiece part (19, 20), a workpiece supported on the workpiece support (3) is subjected to a subsequent processing operation in the working area of the machine arrangement (1), producing a subsequent processing product (21, 22),
• after the subsequent processing operation, the workpiece part (19, 20) supported on the workpiece support (3) and the subsequent processing product (21, 22) supported on the workpiece support (3) are removed from the working area of the machine arrangement (1) together with the workpiece support (3),
**characterised in**
• **that** after separation from the workpiece, the workpiece part (19, 20) is taken off the workpiece support (3) in the working area of the machine arrangement (1),
• **that** the subsequent processing operation is carried out with the workpiece part (19, 20) taken off the workpiece support (3) and
• **that**, after the subsequent processing operation, the workpiece part (19, 20) is put back onto the workpiece support (3), situated in the working area of the machine arrangement (1), before the workpiece part (19, 20) supported on the workpiece support (3) and the subsequent processing product (21, 22) supported on the workpiece support (3) are removed from the working area of the machine arrangement (1) together with the workpiece support (3).

2. A machine method according to claim 1, **characterised in that** the workpiece part (19, 20) taken off the workpiece support (3) is left in the working area of the machine arrangement (1) during the subsequent processing operation.

3. A machine method according to either of the preceding claims, **characterised in that** a separating workpiece processing operation is carried out as the subsequent processing operation, producing by separation a second workpiece part as the subsequent processing product (21, 22).

4. A machine method according to any one of the preceding claims, **characterised in that** the subsequent processing operation is carried out on the remaining workpiece (2') from the preceding processing operation.

5. A machine method according to any one of the preceding claims, **characterised in that** an electrical steel sheet is processed as the metal sheet (2), and a rotor sheet is produced as the workpiece part (19, 20) and a stator sheet is produced as the subsequent processing product (21, 22) or as the second workpiece part.

6. A machine method according to any one of the preceding claims, **characterised in that** the workpiece part (19, 20) and the subsequent processing product (21, 22) are produced with a mutually matching geometry.

7. A machine method according to any one of the preceding claims, **characterised in that**, after the subsequent processing operation, the workpiece part (19, 20) is put back onto the workpiece support (3) with a defined disposition.

8. A machine arrangement for processing plate-like workpieces, especially metal sheets (2), having a workpiece support (3), a separating device (5), a subsequent processing device (5) and a removal device,
• wherein the separating device (5) separates a workpiece part (19, 20) in a working area of the machine arrangement (1) from a workpiece supported on the workpiece support (3),
• wherein, after separation of the workpiece part (19, 20), the subsequent processing device (5) subjects a workpiece supported on the workpiece support (3) to a subsequent processing operation in the working area of the machine arrangement (1), producing a subsequent processing product (21, 22),
• wherein, after the subsequent processing operation, the removal device removes the workpiece part (19, 20) supported on the workpiece support (3) and the subsequent processing product (21, 22) supported on the workpiece support (3) from the working area of the machine arrangement (1) together with the workpiece support (3),
**characterised in**
• **that** in the working area of the machine arrangement (1) a transfer device (13) is provided which takes the workpiece part (19, 20) off the workpiece support (3) after separation from the workpiece,
• **that** the subsequent processing device (5) carries out the subsequent processing operation with the workpiece part (19, 20) taken off the workpiece support (3) and
• **that**, after the subsequent processing operation, the transfer device (13) puts the workpiece part (19, 20) back onto the workpiece support (3), situated in the working area of the machine arrangement (1), before the removal device removes the workpiece part (19, 20) supported on the workpiece support (3) and the subsequent processing product (21, 22) supported on the workpiece support (3) out of the working area of the machine arrangement (1) together with the workpiece support (3).

9. A machine arrangement according to claim 8, **characterised in that** the separating device (5) moves relative to the workpiece during the separating workpiece processing operation, and the transfer device (13) has a removal device (11) which is kinematically connected to the separating device (5) and which takes the workpiece part (19, 20) off the workpiece support (3) after separation from the workpiece.

10. A machine arrangement according to claim 8 or claim 9, **characterised in that** the separating device (5) moves relative to the workpiece during the separating workpiece processing operation, and the transfer device (13) has a holding device (11) which is kinematically connected to the separating device (5) and which, during the subsequent processing operation, holds the workpiece part (19, 20) taken off the workpiece support (3).

11. A machine arrangement according to any one of claims 8 to 10, **characterised in that** the separating device (5) moves relative to the workpiece during the separating workpiece processing operation, and the transfer device (13) has a depositing device (11) which is kinematically connected to the separating device (5) and which puts the workpiece part (19, 20) back onto the workpiece support (3) after the subsequent processing operation.

12. A machine arrangement according to any one of claims 8 to 11, **characterised in that** at least two of the devices from among the removal device (11), the holding device (11) and the depositing device (11) are formed by an operating unit (11) of the transfer device (13).

13. A machine arrangement according to any one of claims 8 to 12, **characterised in that** the separating device (5) is provided on a movement unit (6) which moves the separating device (5) relative to the workpiece during the separating workpiece processing operation, and the removal device (11) and/or the holding device (11) and/or the depositing device (11) and/or the operating unit (11) of the transfer device (13) is/are kinematically connected to the movement unit (6) of the separating device (5), preferably is/are provided on the movement unit (6) of the separating device (5).

## Revendications

1. Procédé mécanique pour l'usinage de pièces du genre plaques, en particulier de tôles (2), comprenant les étapes suivantes :
- lors d'un usinage, une partie de pièce (19, 20) est, dans la zone de travail d'un agencement mécanique (1), découpée dans une pièce supportée par un porte-pièce (3),
- suite à la découpe de la partie de pièce (19, 20), une pièce supportée par le porte-pièce (3) est soumise à un usinage de reprise dans la zone de travail de l'agencement mécanique (1), et on obtient alors un produit d'usinage de reprise (21,22),
- suite à l'usinage de reprise, la partie de pièce (19, 20) supportée par le porte-pièce (3) et le produit d'usinage de reprise (21, 22) supporté par le porte-pièce (3) sont retirés de la zone de travail de l'agencement mécanique (1) conjointement avec le porte-pièce (3),
**caractérisé**
- **en ce que** la partie de pièce (19, 20) est, après avoir été découpée dans la pièce, enlevée du porte-pièce (3) dans la zone de travail de l'agencement mécanique (1),
- **en ce que** l'usinage de reprise est effectué avec la partie de pièce (19, 20) enlevée du porte-pièce (3),
- et **en ce que** la partie de pièce (19, 20) est, suite à l'usinage de reprise, replacée sur le porte-pièce (3) se trouvant dans la zone de travail de l'agencement mécanique (1), avant que la partie de pièce (19, 20) supportée par le porte-pièce (3) et le produit d'usinage de reprise (21, 22) supporté par le porte-pièce (3) soient retirés de la zone de travail de l'agencement mécanique (1) conjointement avec le porte-pièce (3).

2. Procédé mécanique selon la revendication 1, **caractérisé en ce que** la partie de pièce (19, 20) enlevée du porte-pièce (3) est, pendant l'usinage de reprise, laissée dans la zone de travail de l'agencement mécanique (1).

3. Procédé mécanique selon l'une des revendications précédentes, **caractérisé en ce qu'**on effectue comme usinage de reprise un usinage coupant de la pièce, et on obtient alors par découpe une deuxième partie de pièce comme produit d'usinage de reprise (21, 22).

4. Procédé mécanique selon l'une des revendications précédentes, **caractérisé en ce que** l'usinage de reprise est effectué sur la pièce restante (2') de l'usinage précédent.

5. Procédé mécanique selon l'une des revendications précédentes, **caractérisé en ce qu'**on usine comme tôle (2) une tôle électrique, et **en ce qu'**on obtient comme partie de pièce (19, 20) une tôle de rotor et comme produit d'usinage de reprise (21, 22) ou encore comme deuxième partie de pièce une tôle de stator.

6. Procédé mécanique selon l'une des revendications précédentes, **caractérisé en ce que** la partie de pièce (19, 20) et le produit d'usinage de reprise (21, 22) sont obtenus avec des géométries mutuellement ajustées.

7. Procédé mécanique selon l'une des revendications précédentes, **caractérisé en ce que** la partie de pièce (19, 20) est, après l'usinage de reprise, replacée dans une disposition définie sur le porte-pièce (3).

8. Agencement mécanique pour l'usinage de pièces du genre plaques, en particulier de tôles (2), avec un porte-pièce (3), avec un dispositif de coupe (5), avec un dispositif d'usinage de reprise (5) et avec un dispositif d'évacuation,
- sachant que le dispositif de coupe (5) découpe, dans la zone de travail de l'agencement mécanique (1), une partie de pièce (19, 20) dans une pièce supportée par le porte-pièce (3),
- sachant que suite à la découpe de la partie de pièce (19, 20), le dispositif d'usinage de reprise (5) soumet, dans la zone de travail de l'agencement mécanique (1), une pièce supportée par le porte-pièce (3) à un usinage de reprise, et obtient alors un produit d'usinage de reprise (21, 22),
- et sachant que suite à l'usinage de reprise, le dispositif d'évacuation retire la partie de pièce (19, 20) supportée par le porte-pièce (3), et le produit d'usinage de reprise (21, 22) supporté par le porte-pièce (3), de la zone de travail de l'agencement mécanique (1) conjointement avec le porte-pièce (3),
**caractérisé**
- **en ce qu'**un dispositif de transfert (13) est prévu dans la zone de travail de l'agencement mécanique (1), dispositif qui enlève la partie de pièce (19, 20) du porte-pièce (3) après qu'elle ait été découpée dans la pièce,
- **en ce que** le dispositif d'usinage de reprise (5) effectue l'usinage de reprise avec la partie de pièce (19, 20) enlevée du porte-pièce (3),
- et **en ce que** le dispositif de transfert (13), suite à l'usinage de reprise, replace la partie de pièce (19, 20) sur le porte-pièce (3) se trouvant dans la zone de travail de l'agencement mécanique (1), avant que le dispositif d'évacuation retire la partie de pièce (19, 20) supportée par le porte-pièce (3), et le produit d'usinage de reprise (21, 22) supporté par le porte-pièce (3), de la zone de travail de l'agencement mécanique (1) conjointement avec le porte-pièce (3).

9. Agencement mécanique selon la revendication 8, **caractérisé en ce que** le dispositif de coupe (5) se déplace par rapport à la pièce lors de l'usinage coupant de la pièce, et **en ce que** le dispositif de transfert (13) présente un dispositif d'enlèvement (11), qui est lié en déplacement au dispositif de coupe (5) et qui enlève la partie de pièce (19, 20) du porte-pièce (3) après qu'elle ait été découpée dans la pièce.

10. Agencement mécanique selon la revendication 8 ou 9, **caractérisé en ce que** le dispositif de coupe (5) se déplace par rapport à la pièce lors de l'usinage coupant de la pièce, et **en ce que** le dispositif de transfert (13) présente un dispositif de maintien (11), qui est lié en déplacement au dispositif de coupe (5) et qui, pendant l'usinage de reprise, maintient la partie de pièce (19, 20) enlevée du porte-pièce (3).

11. Agencement mécanique selon l'une des revendications 8 à 10, **caractérisé en ce que** le dispositif de coupe (5) se déplace par rapport à la pièce lors de l'usinage coupant de la pièce, et **en ce que** le dispositif de transfert (13) présente un dispositif de dépose (11), qui est lié en déplacement au dispositif de coupe (5) et qui replace la partie de pièce (19, 20) sur le porte-pièce (3) suite à l'usinage de reprise.

12. Agencement mécanique selon l'une des revendications 8 à 11, **caractérisé en ce que**, parmi le dispositif d'enlèvement (11), le dispositif de maintien (11) et le dispositif de dépose (11), au moins deux dispositifs sont formés par une unité de commande (11) du dispositif de transfert (13).

13. Agencement mécanique selon l'une des revendications 8 à 12, **caractérisé en ce que** le dispositif de coupe (5) est prévu sur une unité de déplacement (6) qui déplace le dispositif de coupe (5) par rapport à la pièce lors de l'usinage coupant de la pièce, et **en ce que** le dispositif d'enlèvement (11) et/ou le dispositif de maintien (11) et/ou le dispositif de dépose (11) et/ou l'unité de commande (11) du dispositif de transfert (13) est ou sont liés en déplacement à l'unité de déplacement (6) du dispositif de coupe (5), de préférence est ou sont prévus sur l'unité de déplacement (6) du dispositif de coupe (5).
